# EUROPEAN PATENT SPECIFICATION

(11) **EP 1 989 130 B1**
(45) Date of publication and mention of the grant of the patent: **26.05.2010**
(21) Application number: 07712297.6
(22) Date of filing: 23.02.2007
(51) Int. Cl.: B65G 19/02, B65G 19/26

(54) **MECHANICAL CONVEYING DEVICE FOR EMPTY PLASTIC CONTAINERS FITTED WITH COLLAR, IN HANGING CONDITION**
MECHANISCHE FÖRDEREINRICHTUNG FÜR MIT EINEM BUND VERSEHENE LEERE KUNSTSTOFFBEHÄLTER IM AUFGEHÄNGTEN ZUSTAND
DISPOSITIF DE CONVOYAGE MECANIQUE POUR CONTENEURS PLASTIQUES VIDES MUNIS D'UN COLLIER, EN CONDITION SUSPENDUE

(30) Priority: 01.03.2006 IT PR20060017
(43) Date of publication of application: 12.11.2008
(73) Proprietor: Lecchini, Secondo, 43045 Fornovo Taro (PR) (IT)
(72) Inventor: Lecchini, Secondo, 43045 Fornovo Taro (PR) (IT)
(74) Representative: Guareschi, Antonella
(86) International application number: PCT/EP2007/051750
(87) International publication number: WO 2007/099061

(56) References cited:
- WO-A-97/10163
- WO-A-2007/028627
- DE-U1- 9 209 392
- IT-B- 1 239 102
- US-A- 4 802 571
- US-A- 5 368 151

## Description

The present invention deals with a mechanical conveying device for empty plastic containers fitted with collar, in hanging condition.

The following description refers to containers like plastic bottles, the invention however can also be used to convey preforms or whatever plastic container fitted with a collar (defined as "bague" in technical jargon).

In bottling systems using plastic bottles for conveying empty bottles from one system machine to the other, two types of conveyors are used: mechanical conveyor and air conveyor.

Air conveyors have the inconvenience to move great amounts of air and therefore to pollute containers.

Moreover, they are noisy and require high installed power resulting in high energy consumption as a consequence.

Furthermore air conveyors are unsuitable to convey small containers like preforms.

The present invention deals with a mechanical conveying device.

The industrial invention patent IT 1190535 deals with a mechanical device for conveying empty plastic bottles, in which a conveying belt is equipped with a bottle holder that engages under the bottle neck collar to guide the bottle in hanging condition through a guiding slot that runs along the conveying line.

To move the bottles forward, the present invention envisages the use of devices featuring at least one conveying element with mechanical feed that catches mechanically the bottles and that can be made up by the side edge zone of a conveying belt, or by a wire conveyer, or by several pushing devices acting in the area of the bottle mouth above the collar.

The above mentioned devices however have not met practical application since they show several inconveniences specially in the bending sections or uphill section of the conveying line.

A mechanical conveying device according to the preamble of claim 1, which is described in patent IT 1239102, provides at the side of a pair of longitudinal guiding elements, a closed chain fitted with side elastic pushing devices projecting on the containers' side. This conveyer however, in case of containers piling up due to a stop downstream the machine, produces too much noise and could also damage both the pushing devices and the containers due to the scraping of the pushing devices on containers.

Another Italian Utility Model n. 241946, provides two flexible translating elements for moving the bottles that slide along two fixed guides for supporting and conveying the bottles. The device according to such invention, which contents shall be referred to for further details, does not solve the inconvenience to stop conveyance in case of bottle piling up due to a stop downstream the machine or to accidental jamming.

Object of the present invention is conveying containers fitted with collar by means of mechanical devices that automatically prevent bottle dragging in the event of bottle piling up along the sliding guides, and this without producing noise and impacts that could damage the container in the neck area.

This and other objects are all obtained by the mechanical conveying device for empty plastic containers fitted with collar, in hanging condition, according to claim 1.

These characteristics and advantages will be better pointed out by the following description of two embodiments shown, merely as a non-limiting example, in the enclosed tables of drawing in which:

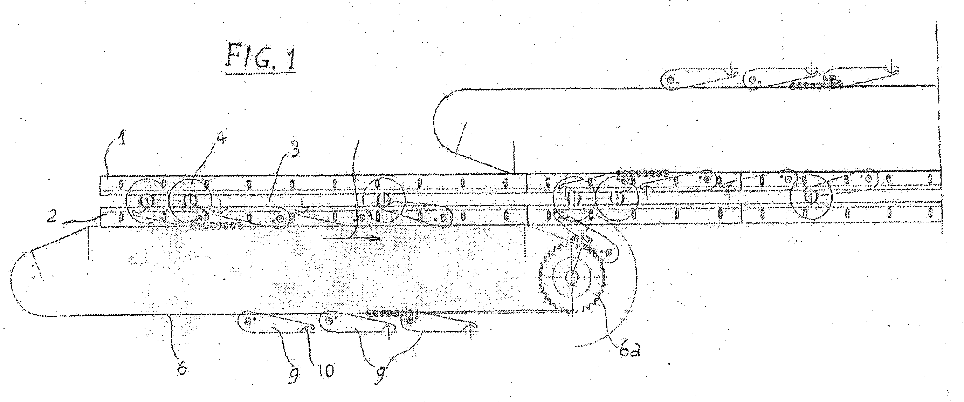

- figure 1 shows a plan top view of the device applied to a conveying guide section
- figures 2 and 3 show a plan bottom view of two embodiments of the device.
- Figure 4 shows a side view of the device in figure 2.

With reference to figures, 1 and 2 designate two guides that create a trough 3 conveying the hanging containers or bottles 4 by the neck; the cross section of the conveying trough is suitable to enable only the passage of the bottle neck 4 and not of the bottle "bague" or collar 5.

Parallel to the guides slides a chain 6 (which is turned by the gear wheel 6 a), to which are secured the plates 7, each plate is hinged at point 8 with a shaped lever 9.

The free end of the shaped lever 9 shows a recess 10 essentially semicircular suitable to surround the neck of the bottle above the collar or "bague".

This shaped lever is kept pressed against the bottle neck by means of elastic pushing devices respectively 11 or 12 according to the invention.

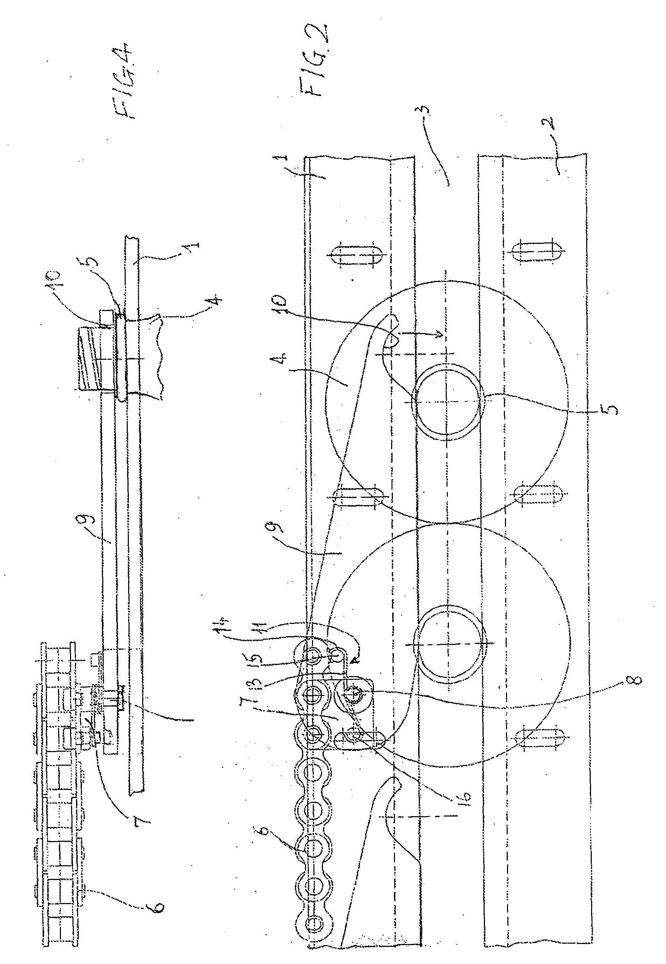

The pushing devices 11 in figure 2 consist of a spring 13, wound on the rotation fulcrum 8 of the shaped lever and whose end 14 winds around a pin 15 integral with the lever, whereas the other end winds around a pin 16 integral with the plate 7.

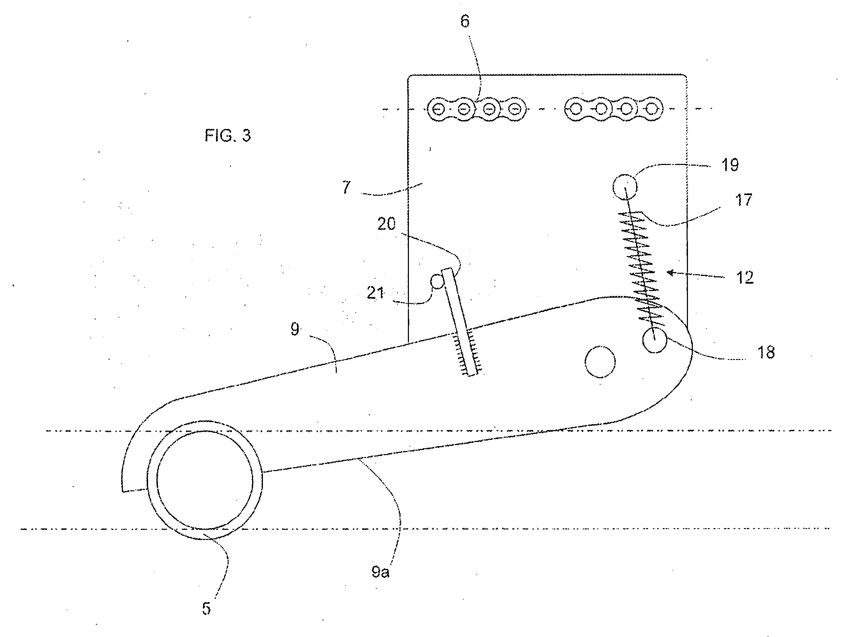

With reference to figure 3, the pushing devices 12 consist of a spring 17 stretched between a pin 18 integral with the lever arm and a pin 19 integral with the plate.

20 designates a rod welded to the shaped lever that interferes with a pin 21 integral with the plate that acts as limit stop for shaped lever rotation.

The side 9a of the lever 9 facing the conveying trough 3 interferes with the trough so that in case of piling up it is pushed by the neck of piled up bottles out of the area of the trough 3, thus preventing dragging.

In order to meet this condition, the length of the shaped lever arm acting on the bottle is longer than the gap spacing out the two vertical axes of two consecutive bottles.

Along the conveying trough several devices could be provided, according to the trough length.

Obviously, modifications and variations can be implemented without departing from the scope of the invention defined by the appended claims.

## Claims

1. Mechanical device for conveying empty plastic containers fitted with collar or "bague" in hanging condition comprising:
- two parallel guides (1, 2) spaced out to form a conveying trough (3) for supporting the containers (4) by their neck;
- a powered chain (6) set aside and parallel to the conveying trough (3);
- several plates (7) evenly arranged and integral with the chain (6);
- several hinged shaped levers (9), each of which is connected to a corresponding plate (7) and is suitable to interfere with the conveying trough (3);
**characterised in that**
- each shaped lever (9) has its fulcrum (8) on the corresponding plate (7);
- the free end of each shaped lever has a recess (10) suitable to surround the neck of the container (4) above the collar or "bague";
- elasting pushing devices (11; 12) are provided to keep the shaped levers (9) pressed against the neck of the container (4) by means of springs (13); and
- the length of each shaped lever arm (9) is longer than the gap spacing out the two vertical axes of two consecutive containers (4).

2. Conveying device according to claim 1 **characterised in that** each shaped lever (9) has a thickness finer than the gap between the collar and the thread for the plug of the plastic containers.

3. Mechanical conveying device according to claim 1 **characterised in that** the recess (10) of the shaped lever (9) is essentially semicircular and is suitable to fit the container in the zone between the collar and the thread.

4. Conveying device according to claim 1 **characterised in that** the elastic pushing devices (11) consist of a spring (13) fitted on the fulcrum (8) and whose end (14) winds around a pin (15) integral with the lever, whereas the other end of the spring winds around a pin (16) integral with the plate (7).

5. Conveying device according to claim 1 **characterised in that** the elastic pushing devices (12) consist of a spring (17) stretched between a pin (18) integral with the lever arm and a pin (19) integral with the plate.

6. Conveying device according to claims 1 and 5 **characterised in that** each elastic pushing device is fitted with a limit stop (2 1) integral with the plate (7) to limit the rotation of the shaped lever.

## Patentansprüche

1. Mechanische Vorrichtung zum Förden von leeren einen Bund oder "bague" aufweisenden Plastikbehältern auf hängende Weise, umfassend:
- zwei parallele, zur Ausbildung einer Fördermulde (3) beabstandete Führungen (1,2) zur Halterung der Behälter (4) an ihrem Hals;
- eine neben und parallel zu der Fördermulde (3) angeordnete Antriebskette (6);
- verschiedene gleichmässig angeordnete, einstückig mit der Kette (6) ausgebildete Platten (7);
- verschiedene drehbar angebrachte Formhebel (9), welche jeweils mit einer entsprechenden Platte (7) verbunden sind und mit der Fördermulde (3) interferieren;
**dadurch gekennzeichnet, dass**
- die einzelnen Formhebel (9) ihren Drehpunkt (8) an der entsprechenden Platte (7) haben;
- das freie Ende jedes Formhebels eine Ausnehmung (10) aufweist, welche den Hals des Behälters (4) über dem Bund oder "bague" umgibt;
- wobei elastische Schiebervorrichtungen (11;12) vorgesehen sind, welche die Formhebel (9) mithilfe von Federn (13) gegen den Hals des Behälters (4) drücken; und
- die Länge der einzelnen Formarme (9) grösser als der Abstand zwischen den beiden senkrechten Achsen zweier aufeinanderfolgender Behälter (4) ist.

2. Fördervorrichtung nach Anspruch 1, **dadurch gekennzeichnet, dass** die einzelnen Formhebel (9) eine Stärke aufweisen, die kleiner als der Abstand zwischen dem Bund und dem Gewinde für den Deckel der Plastikbehälter ist.

3. Mechanische Fördervorrichtung nach Anspruch 1, **dadurch gekennzeichnet, dass** die Ausnehmung (10) des Formhebels (9) im wesentlichen halbkreisförmig ist und dazu dient, den Behälter in den Bereich zwischen Bund und Gewinde einzubringen.

4. Fördervorrichtung nach Anspruch 1, **dadurch gekennzeichnet, dass** die elastischen Schiebervorrichtungen (11) aus einer Feder (13) bestehen, welche an dem Drehpunkt (8) angebracht und deren Ende (14) um einen einstückig mit dem Hebel ausgebildeten Stift (15) gewickelt ist, wobei das andere Ende der Feder um einen einstückig mit der Platte (7) ausgebileten Stift (16) gewickelt ist.

5. Fördervorrichtung nach Anspruch 1, **dadurch gekennzeichnet, dass** die elastischen Schiebervorrichtungen (12) aus einer Feder (17) bestehen, welche zwischen einem einstückig mit dem Hebelarm ausgebildeten Stift (18) und einem einstückig mit der Platte ausgebildeten Stift (19) gespannt ist.

6. Fördervorrichtung nach den Ansprüchen 1 und 5, **dadurch gekennzeichnet, dass** die einzelnen elastischen Schiebervorrichtungen einen einstückig mit der Platte (7) ausgebildeten Begrenzungsanschlag (21) zur Begrenzung der Drehung des Formhebels aufweisen.

## Revendications

1. Dispositif mécanique pour alimenter des conteneurs vides en matière plastique pourvus d'un collier ou « bague » dans une condition suspendue, comprenant :
- deux guides parallèles (1, 2) distanciées en manière de former un canal de transport (3) pour supporter les conteneurs (4) par leur cou ;
- une chaîne d'alimentation (6) montée du côté et parallèle au canal de transport (3) ;
- une pluralité de plaques (7) disposées en plan et incorporées dans la chaîne (6) ;
- une pluralité de leviers (9) à forme de charnière, chacun entre eux étant connecté à une correspondante plaque (7) et étant apte pour interférer avec le canal de transport (3) ;
**caractérisé en ce que**
- chaque levier profilé (9) a son propre point d'appui (8) sur la correspondante plaque (7);
- l'extrémité libre de chaque levier profilé a une cavité (10) apte pour entourer le cou du conteneur (4) au dessus du collier ou «bague»;
- des dispositifs de poussée élastiques (11, 12) sont réalisés pour maintenir les leviers profilés (9) avec pression contre le cou due conteneur (4), par des ressorts (13); et
- la longueur de chaque bras (9) du levier profilé est plus grande que l'espace vide formé pour distancier les deux axes verticales des deux conteneurs (4) consécutifs.

2. Dispositif d'alimentation selon la revendication 1, **caractérisé en ce que** chaque levier profilé (9) a une épaisseur plus petite que l'espace vide formé entre le collier et le filetage pour le bouchon des conteneurs en matière plastique.

3. Dispositif mécanique d'alimentation selon la revendication 1, **caractérisé en ce que** la cavité (10) du levier profilé (9) est essentiellement demi-circulaire et est apte pour monter le conteneur dans la zone comprise entre le collier et le filetage.

4. Dispositif d'alimentation selon la revendication 1, **caractérisé en ce que** les dispositifs de poussée élastiques (11) sont formés par un ressort (13) monté sur le point d'appui (8) et dont l'extrémité (14) s'enroule autour d'un pivot (15) incorporé avec le levier, tandis que l'autre extrémité du ressort s'enroule autour d'un pivot (16) incorporé avec la plaque (7).

5. Dispositif d'alimentation selon la revendication 1, **caractérisé en ce que** les dispositifs de poussée élastiques (12) sont formés par un ressort (17) tendu entre un pivot (18) incorporé avec le bras du levier et un pivot (19) incorporé avec la plaque.

6. Dispositif d'alimentation selon les revendications 1 et 5, **caractérisé en ce que** chaque dispositif de poussée élastique est monté avec un arrêt de limitation (21) incorporé avec la plaque (7) pour limiter la rotation du levier profilé.
